**Europäisches Patentamt**

**European Patent Office**

**Office européen des brevets**

(19)

(11) Publication number : **0 504 187 B1**

(12)

# EUROPEAN PATENT SPECIFICATION

(45) Date of publication of patent specification :
16.02.94 Bulletin 94/07

(51) Int. Cl.⁵ : **B01D 53/18**

(21) Application number : **91900005.9**

(22) Date of filing : **05.12.90**

(86) International application number :
**PCT/CA90/00433**

(87) International publication number :
**WO 91/08039 13.06.91 Gazette 91/13**

(54) **DUAL IMPELLER METHOD AND APPARATUS FOR EFFECTING CHEMICAL CONVERSION.**

(30) Priority : **05.12.89 CA 2004653**

(73) Proprietor : **THE UNIVERSITY OF TORONTO INNOVATIONS FOUNDATION**
**203 College Street, Suite 205**
**Toronto, Ontario M5T 1P9 (CA)**

(43) Date of publication of application :
**23.09.92 Bulletin 92/39**

(72) Inventor : **SMITH, James, W.**
**33 Airdrie Road**
**Toronto, ON, M4G 1L8 (CA)**
Inventor : **LEE, Nim, Yan**
**30 Mallon Avenue**
**Toronto, ON, M4M 1P6 (CA)**

(45) Publication of the grant of the patent :
**16.02.94 Bulletin 94/07**

(84) Designated Contracting States :
**AT BE CH DE DK ES FR GB GR IT LI LU NL SE**

(74) Representative : **Burford, Anthony Frederick**
**W.H. Beck, Greener & Co. 7 Stone Buildings**
**Lincoln's Inn**
**London WC2A 3SZ (GB)**

(56) References cited :
**CA-A- 1 212 819**
**GB-A- 1 521 785**
**US-A- 3 911 093**
**US-A- 4 009 251**
**US-A- 4 525 338**
**CHEMICAL ABSTRACTS, vol. 81, no. 8, 1974,**
**Columbus, Ohio(US), p.242, no. 41073s**

Jouve, 18, rue Saint-Denis, 75001 PARIS

## Description

The present invention relates to method and apparatus for carrying out chemical reactions involving removal of gaseous components from gas streams by chemical conversion to an insoluble phase while in contact with a liquid phase.

Many gas streams contain components which are undesirable and which need to be removed from the gas stream prior to its discharge to the atmosphere or further processing. One such component is hydrogen sulfide, while another such component is sulfur dioxide.

The combustion of sulfur-containing carbonaceous fuels, such as fuel oil, fuel gas, petroleum coke and coal, as well as other processes, produces an effluent gas stream containing sulfur dioxide. The discharge of such sulfur dioxide-containing gas streams to the atmosphere has lead to the incidence of the phenomenon of "acid rain", which is harmful to a variety of vegetation and other life forms. Various proposals have been made to decrease such emissions.

Hydrogen sulfide occurs in varying quantities in a variety of gas streams, for example, in sour natural gas streams and in tail gas streams from various industrial operations. Hydrogen sulfide is odiferous, highly toxic and a catalyst poison for many reactions and hence it is desirable and often necessary to remove hydrogen sulfide from such gas streams.

There exist several commercial processes for effecting hydrogen sulfide removal. These include processes such as absorption in solvents, in which the hydrogen sulfide first is removed as such and then converted into elemental sulfur in a second distinct step, such as a Claus plant. Such commercial processes also include liquid phase oxidation processes, such as Stretford, LO-CAT, Unisulf, Sulferox, Hiperion and others, whereby the hydrogen sulfide removal and conversion to elemental sulfur normally are effected in reaction and regeneration steps.

In CA-A-1,212,819 and its corresponding US-A-4,919,914, there is described a process for the removal of hydrogen sulfide from gas streams by oxidation of the hydrogen sulfide at a submerged location in an agitated flotation cell in intimate contact with an iron chelate solution and flotation of sulfur particles produced in the oxidation from the iron chelate solution by hydrogen sulfide-depleted gas bubbles. In this prior art operation, both an oxygen-containing gas stream and a hydrogen sulfide-containing gas stream are distributed as fine gaseous bubbles at the same submerged location in the iron chelate solution to effect oxidation of the hydrogen sulfide.

In practice, it has been found that the quantity of oxygen required to be provided to effect substantially complete oxidation of the hydrogen sulfide to sulfur significantly exceeds the stoichiometric quantity theoretically required and experimentation has been unable to decrease the oxygen requirement below five times stoichiometric. In other prior art hydrogen sulfide-removal processes, generally more than twenty times the stoichiometric quantity of oxygen is required.

In accordance with the present invention, there is provided a novel procedure for carrying out the hydrogen sulfide removal process outlined above whereby the oxygen usage is significantly improved, as well as novel equipment for carrying out such procedure.

The present invention is particularly concerned with the removal of hydrogen sulfide from a gas stream containing the same by a novel procedure and to novel equipment for effecting the same. However, the principles of the present invention are generally applicable to the removal of gas, liquid and/or solid components from a gas stream by chemical reaction. In the present invention, an efficient contact of gas and liquid is carried out for the purpose of effecting a reaction which removes a component of the gas and converts that component to an insoluble phase while in contact with the liquid phase.

There are a variety of processes to which the principles of the present invention can be applied. The processes generally involve reaction of the component with another gaseous species in a liquid phase, usually an aqueous phase, often an aqueous catalyst system.

One example of such a process is the oxidative removal of hydrogen sulfide from gas streams in contact with an aqueous transition metal chelate system to form sulfur particles, as described generally in the above-mentioned CA-A-1,212,819.

Another example of such a process is in the oxidative removal of mercaptans from gas streams in contact with a suitable aqueous catalyst system to form immiscible liquid disulfides.

A further example of such a process is the oxidative removal of hydrogen sulfide from gas streams using chlorine in contact with an aqueous sodium hydroxide solution, to form sodium sulphate, which, after first saturating the solution, precipitates from the aqueous solution.

An additional example of such a process is the removal of sulfur dioxide from gas streams by the so-called "Wackenroder's" reaction by contacting hydrogen sulfide with an aqueous phase in which the sulfur dioxide is initially absorbed, to form sulfur particles. This process is described in US-A-3,911,093 and 4,442,083. The procedure of the present invention also may be employed to effect the removal of sulfur dioxide from a gas stream into an absorbing medium in an additional gas-liquid contact vessel.

A further example of such a process is the removal of sulfur dioxide from gas streams by reaction with an aqueous alkaline material.

The term "insoluble phase" as used herein, therefore, encompasses a solid insoluble phase, an immiscible liquid phase and a component which becomes insoluble when reaching its solubility limit in the liquid medium after start up.

In one aspect of the present invention, there is provided a method for the removal of a gaseous component from a gas stream containing the same by chemical conversion of the gaseous component to an insoluble phase in a liquid phase, comprising a plurality of steps.

In this method, an enclosed reaction zone is provided having a liquid medium. The reaction zone is provided with a divider therein extending from a top closure to the reaction zone downwardly into the liquid medium to establish first and second individual reaction zones separated physically one from another by the divider but in liquid flow communication with each other. Each individual reaction zone has a gaseous atmosphere above the liquid level therein.

The gaseous component-containing gas stream is fed to a first submerged location in the first individual reaction zone and is distributed at the first submerged location in the form of small gas bubbles. A second gas stream is fed to a second submerged location in the second individual reaction zone and is distributed at the second submerged location in the form of small gas bubbles.

Interaction is permitted between the small gas bubbles of the gaseous component-containing gas stream, the small gas bubbles of the second gas stream and the liquid medium to effect conversion of the gaseous component to an insoluble phase in the liquid medium.

Gas is vented from the gaseous atmosphere in the first individual reaction zone while gas is vented from the gaseous atmosphere in the second individual reaction zone.

The insoluble phase often is provided in a form which is flotable by the gas bubbles after the interaction. In a preferred embodiment, the depleted gas bubbles are permitted to rise through the liquid medium in the respective individual reaction zones and to float the insoluble phase on the surface of the liquid medium in the respective individual reaction zones.

For the removal of hydrogen sulfide from a gas stream by oxidation to sulfur, using an oxygen-containing gas stream as the second gas stream, an aqueous transition metal catalyst solution is employed as the liquid medium. By introducing the oxygen-containing gas stream at a different submerged location from the hydrogen sulfide-containing gas stream, it has been found that the quantity of oxygen required for oxidative removal of hydrogen sulfide can be considerably decreased compared to the process of CA-A-1,212,819, to less than two times stoichiometric. In addition, by introducing the gas streams at different locations within the aqueous phase, any danger of forming an explosive gas mixture of the oxygen-containing gas stream and the hydrogen sulfide-containing gas stream is eliminated.

The present invention also includes novel apparatus for effecting gas-liquid contact reactions, including the removal of hydrogen sulfide from gas streams. In accordance with a second aspect of the invention, such apparatus includes a plurality of elements. An enclosed vessel has divider means extending downwardly within the vessel from an upper closure thereof towards a lower closure to divide the vessel into first and second separate reaction zones which are in liquid flow communication one with another via the body of liquid medium.

First gas feed pipe means extends downwardly in one of the reaction zones. First rotary impeller means is located at the lower end of the first gas pipe means and is mounted for rotation about a vertical axis. First stationary shroud means surrounds the first rotary impeller means and has a plurality of openings therethrough.

Second gas feed pipe means extends downwardly in the other of the reaction zones. Second rotary impeller means is located at the lower end of the second gas feed pipe means and is mounted for rotation about a vertical axis. Second stationary shroud means surrounds the second rotary impeller means and has a plurality of openings therethrough.

First gas vent means communicates with the first reaction zone above the intended liquid level in the vessel while second gas vent means communicates with the second reaction zone above the intended liquid level in the vessel.

In the apparatus, therefore, two individual combinations of gas feed pipe, impeller and shroud and vent means are provided in separate reaction zones physically separated by a divider or baffle.

While the present invention is directed particularly to the removal of hydrogen sulfide from gas streams containing the same and will be described in particular with reference thereto, the invention is more broadly based, as described above.

Figure 1 is a schematic representation of an apparatus constructed in accordance with one embodiment of the invention; and

Figure 2 is a schematic representation of an apparatus constructed in accordance with with another embodiment of the invention.

One embodiment of the present invention is directed towards removing hydrogen sulfide from gas streams. High levels of hydrogen sulfide removal efficiency are attained, generally in excess of 99.99%, from gas streams containing any concentration of hydrogen sulfide. Residual concentrations of hydrogen sulfide less than 0.1 ppm by volume can be attained.

The process of the invention is able to remove effectively hydrogen sulfide from a variety of different source gas streams containing the same, provided there is sufficient oxygen to oxidize the hydrogen sulfide. The oxygen may be present in the hydrogen sulfide-containing gas stream to be treated or may be separately fed, as is desirable where natural gas or other combustible gas streams are treated.

The process of the present invention is able to remove effectively hydrogen sulfide from a variety of different source gas streams containing the same, provided there is sufficient oxygen to oxidize the hydrogen sulfide. Such gas streams include fuel gas and natural gas and other hydrogen-containing streams, such as those formed in oil processing, in oil refineries, mineral wool plants, kraft pulp mills, rayon manufacturing, heavy oil and tar sands processing, coking coal processing, meat rendering, a foul gas stream produced in the manufacture of carborundum, and gas streams formed by air stripping hydrogen sulfide from aqueous phases. The gas stream may be one containing solid particulates or may be one from which such particulates are absent. The ability to handle a particulate-laden gas stream without plugging may be beneficial, since the necessity for upstream cleaning of the gas is obviated.

The process of the present invention for effecting removal of hydrogen sulfide from a gas stream containing the same employs a transition metal chelate in aqueous medium as the catalyst for the oxidation of hydrogen sulfide to sulfur. The transition metal usually is iron, although other transition metals, such as vanadium, chromium, manganese, nickel and cobalt may be employed. Any desired chelating agent may be used but generally, the chelating agent is ethylenediaminetetraacetic acid (EDTA). An alternative chelating agent is HEDTA. The transition metal chelate catalyst may be employed in hydrogen or salt form. The operative range of pH for the process generally is 7 to 11.

The hydrogen sulfide removal process is conveniently carried out at ambient temperatures of about 20° to 25°C, although higher and lower temperatures may be utilized and still achieve an efficient operation. The temperature is generally ranges from 5° to 80°C.

The minimum catalyst concentration to hydrogen sulfide concentration ratio for a given gas throughput may be determined from the rates of the various reactions occurring in the process and is influenced by the temperature and the degree of agitation or turbulence in the reaction vessel. This minimum value may be determined for a given set of operating conditions by decreasing the catalyst concentration until the removal efficiency with respect to hydrogen sulfide begins to drop sharply. Any concentration of catalyst above this minimum may be used, up to the catalyst loading limit of the system.

The process of the present invention generally is effected in a unique apparatus, which constitutes one aspect of the present invention. The apparatus comprises an enclosed vessel containing a body of the chelated iron hydroxide catalyst solution and the catalyst solution is divided into two zones by an internal divider or baffle extending downwardly from an upper closure to the vessel into the catalyst solution to a portion of the depth thereof. The purpose of the divider or baffle is to prevent mixing of the gases in the gas spaces above the respective reaction zones in the catalyst solution, and to provide two reaction zones in the catalyst solution which are physically separate from each other.

The baffle extends only part-way downwardly within the body of catalyst solution, so that there is common body of catalyst solution below the lower edge of the baffle. The baffle may be constructed of any convenient material of construction which achieves this result. The baffle may be constructed of a solid material, or, alternatively, in the portion immersed in the liquid phase, the baffle may be in the form of a fine mesh material which permits liquid flow therethrough but which inhibits the flow of the small gas bubbles therethrough. The mesh may be rendered water-wettable to cause the gas to coalesce.

By providing separate reaction zones within the body of catalyst solution, mixing of the gas streams is largely prevented. Although some flow of hydrogen sulfide-containing gas to the reaction zone into which the oxygen-containing gas stream is fed can be tolerated, it is highly undesirable for the oxygen-containing gas stream to flow to the reaction zone into which the hydrogen sulfide-containing stream is fed, since this flow may lead to contamination of the product gas stream from the hydrogen sulfide removal process, which would be highly undesirable with certain gas streams, for example, natural gas streams.

Although the invention is described particularly with respect to the provision of two separate reaction zones within the body of catalyst solution, it will be readily apparent to those skilled in the art that more than two reaction zones may be employed, as desired, by employing additional baffles downwardly-extending into the catalyst solution. In addition, it is also possible to place more than one impeller in one of the reaction zones.

The removal of hydrogen sulfide by the process of the present invention is carried out in an enclosed gas-liquid contact zone in which is located an aqueous medium containing transition metal chelate catalyst. A hydrogen sulfide-containing gas stream and an oxygen-containing gas stream, which usually is air but may be oxygen or oxygen-enriched air, are caused to flow along a vertical flow path from outside the gas-liquid contact zone to separate submerged locations in the aqueous catalyst medium from which the gas streams are forced by a rotating impeller in each reaction zone to flow through shroud openings into the body of the aqueous medium. Each impeller comprises a plurality of outwardly-extending blades and is rotated about a generally vertical axis. The rotating impeller also draws the liquid phase to the locations of introduction of the gas streams from the body of aqueous medium in the enclosed zone.

The gas-induction impeller and accompanying shroud may be constructed in the manner conventionally employed in an agitated flotation cell, as described in the aforementioned CA-A-1,212,819. Alternatively, and preferably, the combination may be provided in the manner described in copending published International Patent Application Serial No. WO-A-91-08038 published June 13, 1991, in which one of the inventors (James W. Smith) is named as an inventor.

The distribution of the gases as fine bubbles in the reaction medium in the region of the impellers enables a high rate of mass transfer to occur. In the body of catalyst solution, a complicated series of chemical reactions occurs resulting in an overall reaction which is represented by the equation:

$$H_2S + \tfrac{1}{2}O_2 \rightarrow S + H_2O$$

This overall reaction results in depletion of hydrogen sulfide from the hydrogen sulfide-containing gas stream to effect substantial removal therefrom and depletion of oxygen from the oxygen-containing gas stream.

The solid sulfur particles grow in size until of a size which can be floated. Alternative procedures of increasing the particle size may be employed, including spherical agglomeration or flocculation. The flotable sulfur particles are floated by the hydrogen sulfide-depleted gas bubbles rising through the body of catalyst solution and collected as a froth on the surface of the aqueous medium. The sulfur particles range in size from 10 to 50 micrometers in diameter and are in crystalline form.

The hydrogen sulfide-depleted gas stream is removed from a gas space above the liquid level in the reaction zone to which the hydrogen sulfide-containing gas stream is fed. Since this gas space is physically separated from a similar gas space above the liquid level in the reaction zone to which the oxygen-containing gas stream is fed, the product gas stream is uncontaminated by oxygen.

The series of reactions which is considered to occur in the body of the metal chelate solution to achieve the overall reaction noted above is as follows:

$$H_2S = H^+ + HS^-$$
$$OH^- + FeEDTA^- = [Fe.OH.EDTA]^=$$
$$HS^- + [Fe.OH.EDTA]^= = [Fe.HS.EDTA]^= + OH^-$$
$$[Fe.HS.EDTA]^= = FeEDTA^- + S + H^+ + 2e$$
$$2e + \tfrac{1}{2}O_2 + H_2O = 2OH^-$$
$$OH^- + H^+ = H_2O$$

As may be seen from these equations, the stoichiometric use of oxygen requires one-half mole of oxygen for each mole of hydrogen sulfide. As noted earlier, most prior art hydrogen sulfide-removal procedures involving oxidation of hydrogen sulfide employ large excesses of oxygen with respect to stoichiometric. By the present invention, the oxygen requirement has been considerably decreased while obtaining highly-efficient removal of hydrogen sulfide from a variety of gas streams and, at the same time, avoiding contamination of the product gas stream with oxygen. In experimentation, it has been found possible to decrease oxygen usage to below two times stoichiometric, generally to approximately 50% greater than stoichiometric.

Another embodiment of the invention is directed towards removing sulfur dioxide from gas streams. The procedure shows many similarities with the hydrogen sulfide-removal procedure just described, except that the aqueous medium contains an alkaline material.

The aqueous alkaline medium into which the sulfur dioxide-containing gas stream is introduced may be provided by any convenient alkaline material in aqueous dissolution or suspension. One convenient alkaline material which can be used is an alkali metal hydroxide, usually sodium hydroxide. Another convenient material is an alkaline earth metal hydroxide, usually a lime slurry or a limestone slurry.

Absorption of sulfur dioxide in an aqueous alkaline medium. tends to produce the corresponding sulfite. It is preferred, however, that the reaction product be the corresponding sulfate, in view of the greater economic attraction of the sulfate salts. For example, where lime or limestone slurry is used, the by-product is calcium sulfate (gypsum), a multi-use chemical.

Accordingly, in a preferred aspect of the invention, an oxygen-containing gas stream, which usually is air but which may be pure oxygen or oxygen-enriched air, analogously to the case of hydrogen sulfide, is separately introduced to the aqueous alkaline reaction medium, so as to cause the sulfate salt to be formed. When such oxidation reaction is effected in the presence of a lime or limestone slurry, it is generally preferred to add a small amount of an anti-caking agent, to prevent caking of the by-product calcium sulfate on the lime or limestone particles, decreasing their effectiveness. One suitable anti-caking agent is magnesium sulfate.

The concentration of sulfate salt builds up in the aqueous solution after initial start up until it saturates the solution, whereupon the sulfate commences to precipitate from the solution. The crystalline sulfate, usually sodium sulfate or calcium sulfate crystals, may be floated from the solution by the sulfur dioxide depleted gas bubbles, if desired, with the aid of flotation-enhancing chemicals, if required.

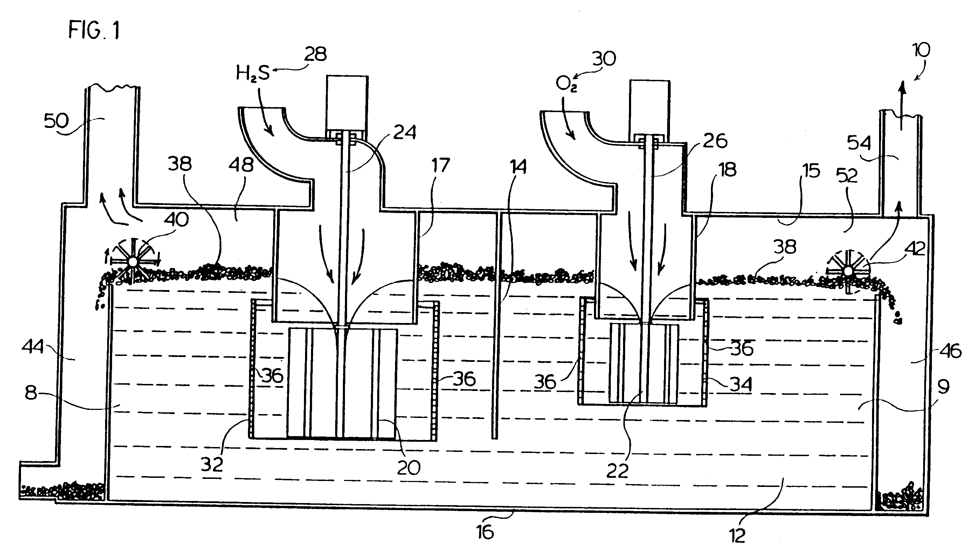

Referring to the drawings, there is illustrated in Figure 1 an enclosed apparatus 10 for effecting removal of hydrogen sulfide from a hydrogen sulfide-containing gas stream. The apparatus 10 contains a body of aqueous iron chelate solution 12, or other convenient transition metal chelate solution, and an internal baffle 14 extending downwardly into the aqueous iron chelate solution 12 from an upper closure 15 towards but spaced from a lower closure 16, dividing the vessel 10 into two reaction zones 8 and 9.

A gas feed pipe 17, 18 extends downwardly into the apparatus 10 on each side of the baffle 14 into the respective reaction zones 8 and 9. An impeller 20, 22 is provided adjacent the lower end of the gas feed pipe 17, 18 respectively and is mounted for rotation about an axle 24, 26, so as to induce gas flow into and through the pipes 17, 18. Each impeller comprises a plurality of radially-extending blades. In the case of pipe 17, a hydrogen sulfide-containing gas stream 28, such as, a sour natural gas stream, is induced and, in the case of pipe 18, an oxygen-containing gas stream 30, such as air, oxygen or oxygen-enriched air, is induced.

Surrounding each impeller 20, 22 is a stationary shroud 32, 34, which has a plurality of openings 36 therethrough, which, combined with the rotation of the impeller 20, 22, results in dispersion of the gases fed through the respective pipes 17 and 18 in the form of fine bubbles. Dispersion of the fine bubbles of hydrogen sulfide-containing gas stream in the iron chelate solution promotes gas-liquid contact and rapid reaction of the hydrogen sulfide to sulfur in the iron chelate solution.

Dispersion of the fine bubbles of oxygen-containing gas stream in the iron chelate solution promotes gas-liquid contact and rapid regeneration of the iron chelate solution. The various reactions which occur in the body of iron chelate solution 12 are described above and result in an overall reaction in the reactor 10 represented by the equation:

$$H_2S + \tfrac{1}{2} O_2 \rightarrow S + H_2O$$

The hydrogen sulfide is removed from the hydrogen sulfide-containing gas stream in contact with the iron chelate solution and bubbles of hydrogen sulfide-depleted gas rise in the reaction zone 8 towards the surface of the iron chelate solution in that zone. Similarly, oxygen is removed from the oxygen-containing gas stream in contact with the iron chelate solution and bubbles of oxygen-depleted gas rise in the reaction zone 9 towards the surface of the iron chelate solution in that zone.

The fine sulfur particles which are formed grow in the body of the iron chelate solution until they reach a size which permits them to be floated to the surface of the iron chelate solution in the respective reaction zones 8 and 9 by the respective bubbles of depleted gas stream, to form a sulfur froth 38 on the iron chelate solution surface. The sulfur is obtained in orthorhombic crystalline form with a particle size ranging from 10 to 30 micrometers. This narrow particle size range permits ready separation of the sulfur from entrained iron chelate solution in further processing of the froth 38. The sulfur may be removed from the surface of the iron chelate solution in each of the zones 8 and 9 by respective skimmers 40, 42 into launders 44, 46.

The hydrogen sulfide-depleted gas stream is collected in a gas space 48 above the surface of the iron chelate solution in zone 8 and is removed by line 50.

The oxygen-depleted gas stream is collected in the gas space 52 above the surface of the iron chelate solution in zone 9 and is removed by line 54. The presence of the baffle 14 ensures that the gas spaces 48 and 52 are physically separated one from another, so that the respective depleted gas streams cannot mix.

Similarly, the presence of the baffle 14 extending downwardly into the body 12 of iron chelate prevents the oxygen-containing gas stream fed to the reaction zone 9 from entering the reaction zone 8, so that contamination of the product gas stream in line 50 by oxygen is avoided.

In the illustrated embodiment, the impeller and shroud combination 22 and 34 for the oxygen-containing gas stream is smaller than the impeller and shroud combination 20 and 32 for the hydrogen sulfide-containing gas stream. This arrangement is the usual one, since the concentration of hydrogen sulfide in the gas stream being treated is usually very much less than the concentration of oxygen in the oxygen-containing gas stream. However, the impeller-shroud combinations may have the same size, as desired.

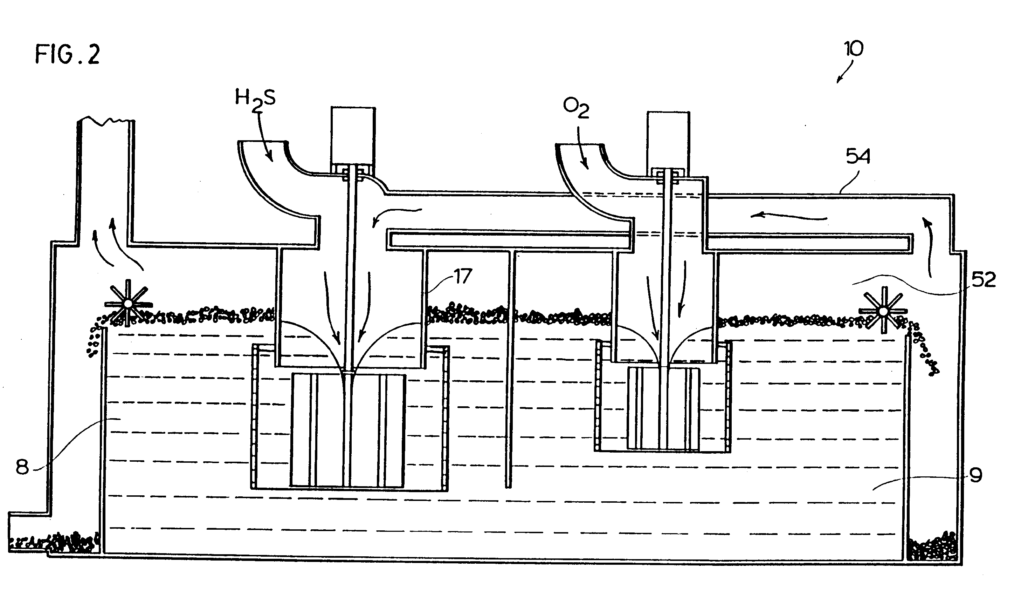

Figure 2 differs from Figure 1 in that the outlet 54 for oxygen-depleted gas stream is fed to the inlet pipe 17 for the hydrogen sulfide-containing gas stream. As a result, oxygen present in the oxygen-depleted gas stream is distributed along with the hydrogen sulfide in reaction zone 8 and is rapidly consumed therein, thereby further decreasing the overall oxygen requirement to close to stoichiometric. This arrangement is also beneficial where some hydrogen sulfide-depleted gas bubbles have entered zone 9 and hence are collected along with the oxygen-depleted gas in the gas space 52.

By providing separate feeds of hydrogen sulfide-containing gas stream and oxygen-containing gas stream into two separate reaction zones within the same body of iron chelate catalyst solution, in contrast to the arrangement described in CA-A-1,212,819, where both gas streams are fed to the same submerged location in the iron chelate solution, a considerably-improved process efficiency, in terms of oxygen usage, is obtainable. As mentioned above, the best result obtainable with the prior system required five times stoichiometric use of oxygen, whereas by using the arrangement illustrated in Figure 1 of the drawings, less than twice the stoichiometric amount of oxygen is required.

One particular advantage that the present invention provides is with respect to the processing of natural gas and similar flammable gas feeds. Since the oxygen-containing gas stream does not come into contact with the hydrogen-sulfide gas stream during the hydrogen sulfide removal operation, potentially explosive gas mixtures are not formed.

In addition, since the gases are separately fed to separate submerged locations, there is no mutual dilution of the hydrogen sulfide and oxygen in the respective gas streams fed to the reactor 10, so that there is achieved a much higher mass transfer rate at each impeller 20,22 than is achieved in CA-A-1,212,819. In the latter patent, the gas streams both are fed to the same submerged location, either as a mixture of gases or separately, so that the gases mutually dilute each other at the submerged locations. As a result of the higher mass transfer rate achieved herein, higher concentrations of hydrogen sulfide can be treated in the same size of equipment.

In addition to the above-noted advantages, the present invention also shares the advantages of the system described in CA-A-1,212,819, namely that hydrogen sulfide is rapidly and efficiently removed from gas streams containing the same, the by-product sulfur is obtained in a narrow particle size range, and induction of the gases is effected at low pressure drop, thereby decreasing the need for pumping.

As mentioned above, the present invention is not limited to the treatment of hydrogen sulfide-containing gas streams to remove the hydrogen sulfide therefrom but is broadly directed to any process in which a gaseous component is oxidized to an insoluble phase in a liquid medium, often in a form which then can be floated from the solution.

For example, the apparatus 10 illustrated in Figures 1 and 2 may be employed to effect the removal of mercaptans from a gas stream containing the same, which is fed by line 28. In this process, the metal chelate solution 12 is replaced by an aqueous sodium hydroxide solution and the liquid disulfides which result from the oxidation are floated off and removed from the surface of the sodium hydroxide solution.

Gas streams contaminated with hydrogen sulfide often also are contaminated by mercaptans, such as sour natural gas streams. In accordance with one embodiment of the invention, both components may be removed from a gas stream containing them by a sequential operation in which the mercaptans first are removed from the gas stream in a first reactor 10 and the hydrogen sulfide subsequently is removed from the gas stream by feeding the product gas stream from the first reactor 10 to a second reactor 10.

EXAMPLE

An experimental apparatus was constructed in accordance with Figure 1 and experiments were conducted in the apparatus to determine the minimum amount of oxygen required by the two-impeller system, with a hydrogen sulfide-containing gas stream being fed to one impeller and with oxygen only being fed to the other impeller.

On the $H_2S$-impeller side, known volumes of hydrogen sulfide were introduced into a nitrogen-bearing gas stream while in the second chamber, a known amount of oxygen was introduced. Above the liquid level, a gas tight barrier was provided while below the liquid level, a fine mesh was provided which allowed a portion of the liquid to pass through while excluding all but the finest of bubbles.

Initially the system was caused to sulfide by flowing excess amounts of hydrogen sulfide and no oxygen into the reactor, which contained a body of iron chelate solution. Sulfiding was characterized by the formation of a black-olive solution, as opposed to the normal pale brown coloration, and very poor $H_2S$ removal.

The oxygen flow rate was slowly increased and the $H_2S$ outlet concentration measured continuously. A point was reached where the removal rate of hydrogen sulfide started to increase, as hydrogen sulfide outlet concentration fell; which was the point where there was just enough oxygen to regenerate sufficient catalyst to replace that sulfide by the $H_2S$. The value then was the minimum oxygen requirement to maintain the reactor system. The procedure was performed at different gas flow rates and rpm.

The results obtained are tabulated in Tables I, II and III below:

EP 0 504 187 B1

## Table I

### Operating Conditions

| | |
|---|---|
| Inlet hydrogen sulfide concentration | 1000 ppm |
| Sodium ion concentration | 0.02 molar |
| Iron concentration | 1 g/L |
| Operating pH range | 9.0 to 9.2 |

## Table II

### Oxygen Flow Rate (mL/min)

| RPM | Nitrogen Flow Rate (L/min) | | | |
|---|---|---|---|---|
| | 10 | 20 | 30 | 50 |
| 600 | 15.4 | 42.7 | 73.5 | |
| 900 | 8.08 | 31.9 | | |
| 1200 | 7.64 | 21.1 | 55.1 | 125 |
| 1500 | | 16.4 | 42.1 | |
| 1800 | 7.02 | 15.4 | 38.5 | 106 |

## Table III

### Mol Ratio of Oxygen to $H_2S$

| RPM | Nitrogen Flow Rate (L/min) | | | |
|---|---|---|---|---|
| | 10 | 20 | 30 | 50 |
| 600 | 1.54 | 2.1 | 2.45 | |
| 900 | 0.81 | 1.9 | | |
| 1200 | 0.764 | 1.05 | 1.84 | 2.5 |
| 1500 | | 0.82 | 1.41 | |
| 1800 | 0.70 | 0.77 | 1.28 | 2.12 |

Table III shows the mole ratio of oxygen required to $H_2S$ consumed. Theoretically, 0.5 mol of $O_2$ is required per mol of $H_2S$. The minimum oxygen required is 1.4 times stoichiometric, as shown in Table III at 10 L/min $N_2$ and 1800 rpm.

## Claims

1. A method for the removal of a gaseous component from a gas stream containing the same by chemical conversion to an insoluble phase in a liquid medium, which comprises:

providing an enclosed reaction zone having a liquid medium therein wherein said reaction zone has a divider therein extending from a top closure to said reaction zone downwardly into said liquid medium to establish first and second individual reaction zones separated physically one from another by said divider but in liquid flow communication with each other, each individual reaction zone having a gaseous atmosphere above the liquid level therein,

feeding said gaseous component-containing gas stream to a first submerged location in said first individual reaction zone and distributing said gas stream at said first submerged location in the form of small gas bubbles,

feeding a second gas stream to a second submerged location in said second individual reaction

8

zone and distributing said second gas stream at said second submerged location in the form of small gas bubbles,

permitting interaction between said small gas bubbles of gaseous component-containing gas stream, said small gas bubbles of said second gas stream and said liquid medium to effect conversion of said gaseous component to an insoluble phase in said liquid medium,

venting gas from said gaseous atmosphere in said first individual reaction zone, and

venting gas from said gaseous atmosphere in said second individual reaction zone.

2. A method as claimed in claim 1, wherein said insoluble phase is flotable by said gas bubbles when depleted of reacted gaseous components thereof, and said depleted gas bubbles are permitted to rise through the liquid medium in the respective individual reaction zones and to float said insoluble phase on the surface of liquid medium in the respective individual reaction zone.

3. A method as claimed in claim 1 or claim 2, wherein said second gas stream is an oxidative component-containing gas stream and said liquid medium is an aqueous medium containing a catalyst for oxidative conversion of said gaseous component to said insoluble phase.

4. A method as claimed in claim 3, wherein said depleted gas bubbles, after reaching the surface of the aqueous catalyst solution in the respective individual reaction zones, form a gaseous component-depleted atmosphere above said liquid medium in said first reaction zone as said gaseous atmosphere therein and a second atmosphere above said liquid medium in said second reaction zone as said gaseous atmosphere therein and physically separated from said gaseous component-depleted atmosphere by said divider.

5. A method as claimed in claim 4, wherein a gaseous component-depleted stream is vented from said gaseous component-depleted atmosphere and another gas stream is vented from said second atmosphere.

6. A method as claimed in claim 4 or 5, wherein said second gas stream is an oxidative component-containing gas stream, said liquid medium is an aqueous medium containing a catalyst for oxidative conversion of said gaseous component to said insoluble phase, a gaseous component-depleted stream is vented from said gaseous component-depleted atmosphere and an oxidative component-depleted gas stream is fed from said second atmosphere to said gaseous component-containing feed stream.

7. A method as claimed in any one of claims 1 to 6, wherein said gas streams are distributed in the form of fine bubbles at the respective submerged locations by the combined action of a rotary impeller and a stationary cylindrical shroud surrounding the impeller and having a plurality of openings therethrough.

8. A method as claimed in claim 7, wherein said rotary impeller and stationary shroud are located at the lower end of a gas feed pipe extending from said upper closure to said reaction vessel and said respective feeds of said gaseous component-containing stream and said second gas stream to said first and second submerged locations are induced through the gas feed pipe by rotation of the respective rotary impeller.

9. A method as claimed in any one of claims 1 to 8, wherein additional divider means is provided in said reaction vessel to define at least one additional reaction zone therein.

10. An apparatus for effecting gas-liquid contact reactions, which comprises:

an enclosed vessel (10) for holding a body of liquid medium (12) in which to effect said reaction,

baffle means (14) extending downwardly within said vessel (10) from an upper closure (15) thereof towards a lower closure (16) thereof to divide said vessel (10) into first and second separate reaction zones (8,9) which are in liquid-flow communication one with another via said body of liquid medium (12),

first gas feed pipe means (17) extending downwardly in one of said reaction zones (8),

first rotary impeller means (20) located at the lower end of said first gas feed pipe means (17) and mounted for rotation about a vertical axis (24),

first stationary shroud means (32) surrounding said first rotary impeller means (20) and having a plurality of openings (36) therethrough,

second gas feed pipe means (18) extending downwardly in the other of said reaction zones (9),

second rotary impeller means (22) located at the lower end of said second gas feed pipe means (18) and mounted for rotation about a vertical axis (26),

second stationary shroud means (34) surrounding said second rotary impeller means (22) and having a plurality of openings (36) therethrough,

first gas vent means (50) communicating with said first reaction zone (8) above (48) the intended liquid level in said vessel (10), and

second gas vent means (54) communicating with said second reaction zone (9) above (52) the intended liquid level in said vessel (10).

11. An apparatus as claimed in claim 10, including first gas feed means (28) communicating with said first gas feed pipe means (17), and second gas feed means (30) communicating with said second gas feed pipe means (18).

12. An apparatus as claimed in claim 11, wherein said first and second rotary impeller means (20,22) are mounted for rotation about a vertical axis by an axle (24,26) extending vertically downwardly in the respective gas feed pipe means (17,18) from exterior to the vessel (10).

13. An apparatus as claimed in claim 11 or 12, wherein the second gas vent means (54) communicates with the first gas feed pipe means (17) to recycle gas from the second reaction zone (9) to the first reaction zone (8).

14. An apparatus as claimed in any one of claims 10 to 13, wherein said second rotary impeller (22) and said second stationary shroud (34) are sized smaller than said first rotary impeller (20) and first stationary shroud (32).

15. An apparatus as claimed in any one of claims 10 to 14, including means (40) for removing insoluble product from the surface of said liquid medium (12) in each of said reaction zones (8,9).

16. An apparatus as claimed in any one of claims 10 to 15, wherein said baffle means (14) comprises a solid baffle element throughout its extension.

17. An apparatus as claimed in any one of claims 10 to 15, wherein said baffle means (14) comprises a solid baffle element above the intended liquid level in said vessel (10) and a baffle element sufficiently porous to permit liquid flow therethrough but insufficiently porous to permit gas flow therethrough below the intended liquid level.


**Patentansprüche**

1. Verfahren zum Entfernen einer Gaskomponente aus einem diese enthaltenden Gasstrom durch chemische Umwandlung in eine unlösliche Phase in einem flüssigen Medium, mit folgenden Schritten:

Bereitstellen einer umschlossenen Reaktionszone mit einem flüssigen Medium darin, wobei in der Reaktionszone eine Trenneinrichtung vorgesehen ist, die sich von einer oberen Abdeckung in die Reaktionszone nach unten und in das flüssige Medium erstreckt, um eine erste und eine zweite gesonderte Reaktionszone zu bilden, die durch die Trenneinrichtung körperlich voneinander getrennt sind, jedoch miteinander über eine Flüssigkeitsströmung kommunizieren, wobei jede der eigenständigen Reaktionszonen eine Gasatmosphäre oberhalb ihres Flüssigkeitspegels hat,

Einführen des genannten, die Komponente enthaltenden Gasstromes an einen ersten, eingetauchten Ort in der ersten gesonderten Reaktionszone und Verteilen des Gasstromes an der genannten eingetauchten Stelle in Form von kleinen Gasbläschen,

Einführen eines zweiten Gasstromes an einer zweiten eingetauchten Stelle in der zweiten gesonderten Reaktionszone und Verteilen des zweiten Gasstromes an der genannten zweiten eingetauchten Stelle in Form von kleinen Gasbläschen,

Herbeiführen einer Wechselwirkung zwischen den genannten kleinen Gasbläschen des die gasförmige Komponente enthaltenden Gasstromes, wobei die genannten kleinen Gasbläschen des zweiten Gasstromes und das genannte flüssige Medium eine Umwandlung der gasförmigen Komponente in eine unlösliche Phase im flüssigen Medium bewirken,

Einführen von Gas aus der genannten Gasatmosphäre in die erste gesonderte Reaktionszone, und Einführen von Gas aus der Gasatmosphäre in die zweite gesonderte Reaktionszone.

2. Verfahren nach Anspruch 1, wobei die genannte unlösliche Phase durch die Gasbläschen auftreibbar ist, wenn darin die gasförmigen Komponenten durch Reaktion erschöpft sind, und wobei die von gasförmigen Komponenten befreiten Gasbläschen durch das flüssige Medium in der zugeordneten gesonderten Reaktionszone aufsteigen, um die genannte unlösliche Phase auf die Oberfläche des flüssigen Mediums in der zugeordneten gesonderten Reaktionszone zu bringen.

3. Verfahren nach einem der Ansprüche 1 odere 2, wobei der zweite Gasstrom eine oxidative Komponente enthält und das flüssige Medium wässrig ist und einen Katalysator für eine oxidative Umwandlung der Gaskomponente in die unlösliche Phase enthält.

4. Verfahren gemäß Anspruch 3, wobei die entleerten Gasbläschen nach Erreichen der Oberfläche der wässrigen Katalysatorlösung in der zugeordneten gesonderten Reaktionszone eine gasförmige, hinsichtlich der Komponenten entleerte Atmosphäre oberhalb des flüssigen Mediums in der genannten ersten Reaktionszone als gasförmige Atmosphäre darin bilden und eine zweite Atmosphäre oberhalb des genannten flüssigen Mediums in der zweiten Reaktionszone als die genannte gasförmige Atmosphäre darin, wobei eine körperliche Trennung der genannten gasförmigen, an Komponenten entleerten Atmosphäre durch die genannte Trenneinrichtung gegeben ist.

5. Verfahren nach Anspruch 4, wobei ein gasförmiger, hinsichtlich der Komponenten entleerter Strom aus der genannten gasförmigen, hinsichtlich der Komponenten entleerten Atmosphäre entnommen wird und ein weiterer Gasstrom aus der zweiten Atmosphäre.

6. Verfahren nach einem der Ansprüche 4 oder 5, wobei der genannte zweite Gasstrom oxidierend ist und die Komponenten enthält, das genannte flüssige Medium wässrig ist und einen Katalysator zur oxidierenden Umwandlung der genannten gasförmigen Komponente in die genannte unlösliche Phase aufweist, ein gasförmiger, hinsichtlich des Komponentengehaltes reduzierter Strom von der genannten, hinsichtlich der Komponenten entleerten Atmosphäre entnommen und ein oxidierender, hinsichtlich der Komponenten entleerter Gasstrom von der genannten zweiten Atmosphäre in den genannten gasförmigen, die Komponenten enthaltenden Strom eingespeist wird.

7. Verfahren nach einem der Ansprüche 1 bis 7, wobei die genannten Gasströmungen in Form feiner Bläschen an den einzelnen eingetauchten Positionen durch die kombinierte Wirkung eines Dreh-Flügelrades und einer ortsfesten zylindrischen Ummantelung, die das Flügelrad umgibt und eine Mehrzahl von Öffnungen aufweist, verteilt werden.

8. Verfahren nach Anspruch 7, wobei das drehende Flügelrad und die ortsfeste Ummantelung am unteren Ende eines Gas-Zuführrohres angeordnet sind, welches sich von der oberen Abdeckung zu dem Reaktionsgefäß erstreckt und wobei die einzelnen Zuführungen des gasförmige Komponenten enthaltenden Stromes und des geannten zweiten Gasstromes zu den ersten und zweiten eingetauchten Positionen über das Gas-Zuführrohr durch Drehung des jeweiligen Flügelrades bewirkt werden.

9. Verfahren gemäß einem der Ansprüche 1 bis 8, wobei eine zusätzliche Trenneinrichtung in dem Reaktionsgefäß vorgesehen ist, um zumindest eine weitere Reaktionszone abzugrenzen.

10. Vorrichtung zum Durchführen von Gas/Flüssigkeit-Kontaktreaktionen mit:
einem umschlossenen Gefäß (10) zum Aufnehmen eines flüssigen Mediums (12), in dem die Reaktion durchgeführt wird,
einer Prallwand (14), die sich in dem Gefäß (10) von einer oberen Abdeckung (15) nach unten in Richtung auf einen Boden (16) erstreckt, um das Gefäß (10) in getrennte erste und zweite Reaktionszonen (8, 9) aufzuteilen, die über das flüssige Medium (12) kommunizieren,
einem ersten Gas-Zuführrohr (17), das sich nach unten in Richtung auf die erste Reaktionszone (8) erstreckt,
einem ersten Drehflügelrad (20), das am unteren Ende des ersten Gas-Zuführrohres (17) für eine Drehung um eine vertikale Achse (24) angeordnet ist,
einer ersten ortsfesten Ummantelung (32), die das erste Flügelrad (20) umgibt und eine Vielzahl von Öffnungen (36) aufweist,
einem zweiten Gas-Zuführrohr (18), das sich nach unten in die zweite Reaktionszone (9) erstreckt,
einem zweiten Drehflügelrad (22), das am unteren Ende des zweiten Gas-Zuführrohres (18) zur Drehung um eine vertikale Achse (26) angeordnet ist,
einer zweiten ortsfesten Ummantelung (34), die das zweite Flügelrad (22) umgibt und mit einer Vielzahl von Öffnungen (36) versehen ist,
einer ersten Gas-Ventilationseinrichtung (50), die mit der ersten Reaktionszone (8) oberhalb (48)

11

eines angestrebten Flüssigkeitspegels in dem Gefäß (10) kommuniziert, und

einer zweiten Gas-Ventilationseinrichtung (54), die mit der zweiten Reaktionszone (9) oberhalb (52) des angestrebten Flüssigkeitspegels in dem Gefäß (10) kommuniziert.

11. Vorrichtung nach Anspruch 10 mit einer ersten Gas-Zuführeinrichtung (28), die mit dem genannten ersten Gas-Zuführrohr (17) kommuniziert, und einer zweiten Gas-Zuführeinrichtung (30), die mit dem zweiten Gas-Zuführrohr (18) kommuniziert.

12. Vorrichtung nach Anspruch 11, wobei die genannten ersten und zweiten Drehflügelräder (20, 22) zur Drehung um eine vertikale Achse auf einer Welle (24, 26) montiert sind, die sich vertikal nach unten von außerhalb des Gefäßes (10) in das jeweils zugeordnete Gas-Zuführrohr (17, 18) erstreckt.

13. Vorrichtung nach einem der Ansprüche 11 oder 12, wobei die zweite Gas-Ventilationseinrichtung (54) mit dem ersten Gas-Zuführrohr (17) kommuniziert, um Gas aus der zweiten Reaktionszone (9) in die erste Reaktionszone (8) zurückzuführen.

14. Vorrichtung nach einem der Ansprüche 10 bis 13, wobei das zweite Drehflügelrad (22) und die zweite ortsfeste Ummantelung (34) kleiner gestaltet sind als das erste Drehflügelrad (20) und die erste ortsfeste Ummantelung (32).

15. Vorrichtung nach einem der Ansprüche 10 bis 14, einschließlich einer Einrichtung (40) zum Entfernen unlöslicher Produkte von der Oberfläche des flüssigen Mediums (12) in jeder der Reaktionszonen (8, 9).

16. Vorrichtung nach einem der Ansprüche 10 bis 15, wobei die genannte Prallwand (14) über ihre Erstreckung fest ausgeformt ist.

17. Vorrichtung nach einem der Ansprüche 10 bis 15, wobei die Prallwand (14) eine feste Wand oberhalb des angestrebten Flüssigkeitspegels in dem Gefäß (10) aufweist und ein Bauteil, das hinreichend porös ist, um eine Flüssigkeitsströmung durchzulassen, jedoch nicht hinreichend porös ist, um unterhalb des angestrebten Flüssigkeitspegels eine Gasströmung durchzulassen.

## Revendications

1. Procédé pour éliminer un composant gazeux d'un courant de gaz contenant ce composant par conversion chimique en une phase insoluble dans un milieu liquide, qui consiste à :

former une zone de réaction enfermée contenant un milieu liquide, où ladite zone de réaction renferme une cloison s'étendant d'une fermeture supérieure à ladite zone de réaction, en plongeant dans le milieu liquide pour établir des première et deuxième zones de réaction individuelles séparées physiquement l'une de l'autre par ladite cloison mais en communication entre elles pour l'écoulement du liquide, chaque zone de réaction individuelle renfermant une atmosphère gazeuse au-dessus du niveau du liquide dans cette zone ;

introduire ledit courant de gaz contenant le composant gazeux dans une première région immergée dans ladite première zone de réaction individuelle et distribuer ledit courant de gaz dans ladite première région immergée sous la forme de petites bulles de gaz,

introduire un deuxième courant de gaz dans une deuxième région immergée dans ladite deuxième zone de réaction individuelle et distribuer ledit courant de gaz dans ladite deuxième région immergée sous la forme de petites bulles de gaz,

permettre l'interaction entre lesdites petites bulles de gaz du courant de gaz contenant le composant gazeux, lesdites petites bulles de gaz dudit deuxième courant de gaz et ledit milieu liquide pour provoquer la conversion dudit composant gazeux en une phase insoluble dans ledit milieu liquide,

évacuer le gaz de ladite atmosphère gazeuse contenue dans ladite première zone de réaction individuelle, et

évacuer le gaz de ladite atmosphère gazeuse contenue dans ladite deuxième zone de réaction individuelle.

2. Procédé selon la revendication 1, dans lequel ladite phase insoluble peut être mise en flottation par lesdites bulles de gaz lorsqu'elles sont épurées de leurs composants gazeux entrés en réaction et lesdites bulles de gaz épurées sont laissées libres de s'élever à travers le milieu liquide dans les zones de réaction individuelles respectives et de faire flotter ladite phase insoluble à la surface du milieu liquide contenu dans la zone de réaction individuelle respective.

3. Procédé selon la revendication 1 ou la revendication 2, dans lequel ledit deuxième courant de gaz est un courant de gaz contenant un composé oxydant et ledit milieu liquide est un milieu aqueux contenant un catalyseur pour la conversion oxydante dudit composant gazeux en ladite phase insoluble.

4. Procédé selon la revendication 3, dans lequel lesdites bulles de gaz épurées, après avoir atteint la surface de la solution catalytique aqueuse dans les zones de réaction individuelles respectives, forment une atmosphère épurée du composant gazeux au-dessus dudit milieu liquide dans ladite première zone de réaction pour y former ladite atmosphère gazeuse, et une deuxième atmosphère qui surmonte ledit milieu liquide dans ladite deuxième zone de réaction pour y former ladite atmosphère gazeuse, et séparer physiquement de ladite atmosphère épurée du composant gazeux par ladite cloison.

5. Procédé selon la revendication 4, dans lequel un courant épuré du composant gazeux est évacué de ladite atmosphère épurée du composant gazeux et un autre courant gazeux est évacué de ladite deuxième atmosphère.

6. Procédé selon la revendication 4 ou 5, dans lequel ledit deuxième courant de gaz est un courant de gaz contenant un composant oxydant, ledit milieu liquide est un milieu aqueux contenant un catalyseur pour la conversion par oxydation dudit composant gazeux en ladite phase insoluble, un courant épuré du composant gazeux est évacué de ladite atmosphère épurée en composant gazeux et un courant de gaz épuré du composant oxydant est envoyé de ladite deuxième atmosphère audit courant d'alimentation contenant le composant gazeux.

7. Procédé selon une quelconque des revendications 1 à 6, dans lequel lesdits courants de gaz sont distribués sous la forme de fines bulles dans les régions immergées respectives par l'action combinée d'une roue à aubes rotative et d'un carénage cylindrique fixe qui entoure la roue à aubes et présente une pluralité d'ouvertures qui le traversent.

8. Procédé selon la revendication 1, dans lequel ladite roue à aubes rotative et ledit carénage fixe sont placés à l'extrémité inférieure d'un tube d'alimentation du gaz qui s'étend de ladite fermeture supérieure à ladite cuve de réaction et lesdites alimentations respectives dudit courant contenant le composant gazeux et dudit deuxième courant de gaz dans lesdites première et deuxième régions immergées sont induites, en passant par le tube d'alimentation du gaz, par la rotation de la roue à aubes rotative respective.

9. Procédé selon une quelconque des revendications 1 à 8, dans lequel des moyens séparateurs additionnels sont prévus dans ladite cuve de réaction pour y définir au moins une zone de réaction additionnelle.

10. Appareil pour réaliser des réactions par contact gaz-liquide, qui comprend :
   une cuve fermée (10) destinée à contenir une masse de milieu liquide (12) dans laquelle doit s'effectuer ladite réaction,
   des moyens formant chicane (14) qui plongent dans ladite cuve (10) en partant de la fermeture supérieure de celle-ci, et en se dirigeant vers sa fermeture inférieure (16) pour diviser ladite cuve (10) en des première et deuxième zones de réaction séparées (8, 9) qui sont en communication entre elles pour l'écoulement du liquide en passant dans ladite masse de milieu liquide (12),
   des premiers moyens (17) formant tube d'alimentation du gaz qui s'étendent vers le bas dans une desdites zones de réaction (8),
   des premiers moyens (20) du type roue à aubes rotative, placés à l'extrémité inférieure desdits premiers moyens (17) formant tube d'alimentation de gaz et montés pour tourner autour d'un axe vertical (24),
   des premiers moyens (32) formant carénage fixe, qui entourent lesdites premiers moyens (20) du type roue à aubes rotative, et ayant une pluralité d'ouvertures (36) qui les traversent,
   des deuxièmes moyens (18) formant tube d'alimentation de gaz qui s'étendent vers le bas dans l'autre desdites zones de réaction (9),
   des deuxièmes moyens (22) du type roue à aubes rotative, placés à l'extrémité inférieure desdits deuxièmes moyens (18) formant tube d'alimentation de gaz et montés pour tourner autour d'un axe vertical (26),
   des deuxièmes moyens formant carénage fixe (34) qui entourent lesdits deuxièmes moyens (22) du type roue à aubes rotative et présentant une pluralité d'ouvertures (36) qui les traversent,

des premiers moyens (50) formant évent de gaz, qui communiquent avec ladite première zone de réaction (8) au-dessus (48) du niveau envisagé de liquide dans ladite cuve (10), et

des deuxièmes moyens (54) formant évent de gaz, qui communiquent avec ladite deuxième zone de réaction (9) au-dessus (52) du niveau envisagé du liquide dans ladite cuve (10).

11. Appareil selon la revendication 10, comprenant des premiers moyens (28) d'alimentation de gaz qui communiquent avec lesdits premiers moyens (17) formant tube d'alimentation de gaz, et des deuxièmes moyens (30) d'alimentation de gaz qui communiquent avec lesdits deuxièmes moyens (18) formant tube d'alimentation de gaz.

12. Appareil selon la revendication 11, dans lequel lesdits premiers et deuxièmes moyens (20, 22) du type roue à aubes rotative sont montés pour tourner autour d'un axe vertical, par un arbre (24, 26) s'étendant verticalement vers le bas dans les moyens (17, 18) formant tube d'alimentation de gaz respectifs, en partant de l'extérieur de la cuve (10).

13. Appareil selon la revendication 11 ou 12, dans lequel lesdits deuxièmes moyens (54) formant évent de gaz communiquent avec les premiers moyens (17) formant tube d'alimentation de gaz pour recycler le gaz de la deuxième zone de réaction (9) à la première zone de réaction (8).

14. Appareil selon une quelconque des revendications 10 à 13, dans lequel ladite deuxième roue à aubes rotative (22) et ledit deuxième carénage fixe (34) sont de dimensions inférieures à celles de ladite première roue à aubes rotative (20) et du premier carénage fixe (32).

15. Appareil selon une quelconque des revendications 10 à 14, comprenant des moyens (40) destinés à éliminer un produit insoluble de la surface dudit milieu liquide (12) dans chacune desdites zones de réaction (8, 9).

16. Appareil selon une quelconque des revendications 10 à 15, dans lequel lesdits moyens (14) formant chicane comprennent un élément chicane plein sur toute son étendue.

17. Appareil selon une quelconque des revendications 10 à 15, dans lequel lesdits moyens (14) formant chicane comprennent un élément chicane plein au-dessus du niveau de liquide envisagé dans ladite cuve (10) et un élément chicane suffisamment poreux pour laisser le liquide le traverser mais insuffisamment poreux pour laisser le gaz le traverser au-dessous du niveau de liquide envisagé.

FIG.1

EP 0 504 187 B1

FIG.2

H₂S

O₂

10

54

52

16

8

9

17

EP 0 504 187 B1